# EUROPÄISCHE PATENTSCHRIFT

(11) **EP 3 291 928 B1**
(45) Veröffentlichungstag und Bekanntmachung des Hinweises auf die Patenterteilung: **22.05.2019**
(21) Anmeldenummer: 16728588.1
(22) Anmeldetag: 29.04.2016
(51) Int. Cl.: B21D 39/04

(54) **VERFAHREN ZUM VERBINDEN EINES ROHRES, FÜR FLÜSSIGE ODER GASFÖRMIGE MEDIEN, MIT EINEM STECKVERBINDER**
METHOD FOR CONNECTING A PIPE, FOR LIQUID OR GASEOUS MEDIA, WITH A PLUG CONNECTOR
PROCÉDÉ D'ASSEMBLAGE D'UN TUYAU POUR MILIEUX LIQUIDES OU GAZEUX À UN RACCORD ENFICHABLE

(30) Priorität: 06.05.2015 AT 503712015
(43) Veröffentlichungstag der Anmeldung: 14.03.2018
(73) Patentinhaber: Henn GmbH & Co KG., 6850 Dornbirn (AT)
(72) Erfinder: RIST, Marvin, 6921 Kennelbach (AT)
(74) Vertreter: Burger, Hannes
(86) Internationale Anmeldenummer: PCT/AT2016/050118
(87) Internationale Veröffentlichungsnummer: WO 2016/176704

(56) Entgegenhaltungen:
- EP-A1- 1 208 936
- EP-A1- 1 762 312
- DE-A1- 19 935 402
- DE-B3-102013 219 159

## Beschreibung

Die Erfindung betrifft ein Verfahren zum Verbinden eines Rohres für flüssige oder gasförmige Medien mit einem Steckverbinder.

Eine Verpressung eines Steckverbinders mit einem Endabschnitt einer Leitung, bei welcher die Presskraft in Abhängigkeit vom Weg auf unterschiedliche Werte geregelt wird, auch wegabhängige Kraftregelung genannt, geht aus der EP 1 762 312 A1 hervor. Der Endabschnitt der Leitung wird in einen Ringraum zwischen dem inneren hülsenförmigen ersten Wandabschnitt und dem äußeren hülsenförmigen zweiten Wandabschnitt eingesteckt, worauf mit einem Spreizwerkzeug der erste Wandabschnitt von innen her in Richtung zum äußeren Wandabschnitt gegen den im Ringraum zwischen den beiden Wandabschnitten eingesteckten Endabschnitt der Leitung eingedrückt wird. Dabei wird eine ringförmig umlaufende Pressnut im ersten Wandabschnitt ausgebildet. Um sicherzustellen, dass ein ausreichender Verpressgrad bzw. eine ausreichende Verpressung erreicht wird, ist vorgesehen, dass die Verpresskraft überwacht wird, wobei ein Sollwert der Verpresskraft vorgegeben ist und die aktuell aufgebrachte Verpresskraft mit diesem Sollwert verglichen wird.

Aus der EP 2 364 791 B1 ist ein weiteres Verfahren bzw. eine Vorrichtung zum Verpressen einer Leitung bekannt.

Bei den aus der EP 1 762 312 A1 und der EP 2 364 791 B1 bekannten Vorrichtungen bzw. Verfahren ist ein möglicher Bruch des zu verpressenden Werkstückes bzw. des Werkzeuges nur bedingt feststellbar.

Der vorliegenden Erfindung liegt die Aufgabe zugrunde, ein Pressverfahren anzugeben, bei welchem ein möglicher während des Pressvorganges auftretender Bruch des Werkstückes, insbesondere des Steckverbinders bzw. des Werkzeuges erkannt wird.

Diese Aufgabe der Erfindung wird durch das Verfahren gemäß Anspruch 1 gelöst.

Erfindungsgemäß ist zum Verbinden eines Rohres für flüssige oder gasförmige Medien mit einem Steckverbinder vorgesehen, dass ein erster Mantelabschnitt des Steckverbinders mittels einem Presswerkzeug derart verformt wird, sodass ein zwischen dem ersten Mantelabschnitt und einem zweiten Mantelabschnitt des Steckverbinders liegendes Rohr geklemmt wird. Weiters ist vorgesehen, dass während des Pressvorganges die am Presswerkzeug anliegende Presskraft erfasst wird und aus dem Verfahrweg des Presswerkzeuges sowie der Presskraft ein Presskraftanstieg pro Wegeinheit berechnet wird. Außerdem ist vorgesehen, dass der erfasste Presskraftanstieg pro Wegeinheit mit einem mindestens erforderlichen Presskraftanstieg pro Wegeinheit verglichen wird und bei einem Unterschreiten des als mindestens erforderlich festgelegten Presskraftanstieges pro Wegeinheit der Steckverbinder als fehlerhaft erkannt wird.

Von Vorteil an diesem Verfahren ist, dass ein während des Pressvorganges auftretender Bruch des Steckverbinders erfasst werden kann und eine entsprechende Aktion gesetzt werden kann, sodass dieses Ausschussteil nicht in einem Kraftfahrzeug verbaut wird. Insbesondere kann durch das erfindungsgemäße Verfahren erreicht werden, dass eine Detektion eines Werkstückbruches unabhängig von der Dimensionierung des Steckverbinders und auch unabhängig von der Einhaltung der Fertigungstoleranzen im Steckverbinder erfolgen kann.

Ferner kann vorgesehen sein, dass als Inkrementeller Wert für eine Wegeinheit zwischen einem zehntausendstel Millimeter und einem zehntel Millimeter, insbesondere ein tausendstel Millimeter festgelegt wird. Von Vorteil ist hierbei, dass die Skalierung entsprechend fein gewählt wird, um einen etwaig auftretenden Werkzeugbruch auch mit ausreichender Sicherheit detektieren zu können.

Weiters kann es zweckmäßig sein, dass einem Maschinenbediener ein als fehlerhaft erkannter Steckverbinder durch eine Akustische und/oder optische Signalisierung angezeigt wird. Von Vorteil ist hierbei, dass der Maschinenbediener somit den als fehlerhaft gekennzeichneten Steckverbinder ausmustern kann, sodass dieser aus dem Produktionsprozess ausscheidet.

Alternativ dazu kann vorgesehen sein, dass ein als fehlerhaft erkannter Steckverbinder in einem automatisierten Prozess ausgeschieden wird. Von Vorteil ist hierbei, dass in einem automatisierten Produktionsprozess, in welchem einzelne Verfahrensschritte nicht direkt von einem Maschinenbediener durchgeführt werden, der fehlerhafte Steckverbinder automatisch ausgeschieden wird.

Darüber hinaus ist es möglich, dass der Presskraftanstieg pro Wegeinheit aufgezeichnet und grafisch dargestellt wird. Von Vorteil ist hierbei, dass durch die Aufzeichnung bzw. die grafische Darstellung des Presskraftverlaufes von beschädigten Steckverbindern Aufschluss über gewisse Charakteristika des Bruchverhaltens gewonnen werden kann.

Weiters kann vorgesehen sein, dass der mindestens erforderliche Presskraftanstieg pro Wegeinheit mit größer null Newton pro Wegeinheit festgelegt wird. Von Vorteil ist hierbei, dass bei diesem Wert mit hoher Wahrscheinlichkeit davon ausgegangen werden kann, dass ein Bruch des Steckverbinders vorliegt.

Außerdem ist es möglich, dass der Steckverbinder dann als fehlerhaft erkannt wird wenn Presskraftanstieg pro Wegeinheit über mehrere Wegeinheiten hinweg den mindestens erforderlichen Presskraftanstieg unterschreitet. Von Vorteil ist hierbei, dass somit ein sogenannter Ausreißwert ausgeschlossen werden kann und somit die Qualität der Kontrolle verbessert werden kann. Dadurch wird weniger Ausschuss produziert.

Der Begriff "Rohr" wird im Rahmen der vorliegenden Erfindung weit gefasst. Es wird darunter nicht nur ein elastomerer Schlauch verstanden, sondern auch ein Rohr, welches eine starre Form aufweist. Es kann sich also auch um übliche Kunststoffrohre handeln.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Steckerbaugruppe in einem Viertelschnitt;
- Fig. 2: ein mit der Steckerbaugruppe ausgestattetes Fahrzeug;
- Fig. 3: eine Schnittdarstellung eines ersten Ausführungsbeispiels der Steckerbaugruppe in einer Explosionsansicht;
- Fig. 4: eine Schnittdarstellung eines zweiten Ausführungsbeispiels der Steckerbaugruppe in einer Explosionsansicht;
- Fig. 5: eine Schnittdarstellung der Steckerbaugruppe mit Verpresswerkzeug;
- Fig. 6: eine perspektivische Ansicht der Steckerbaugruppe mit Verpresswerkzeug;
- Fig. 7: eine schematische Darstellung des Kraftverlaufes bei einem Pressvorgang.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

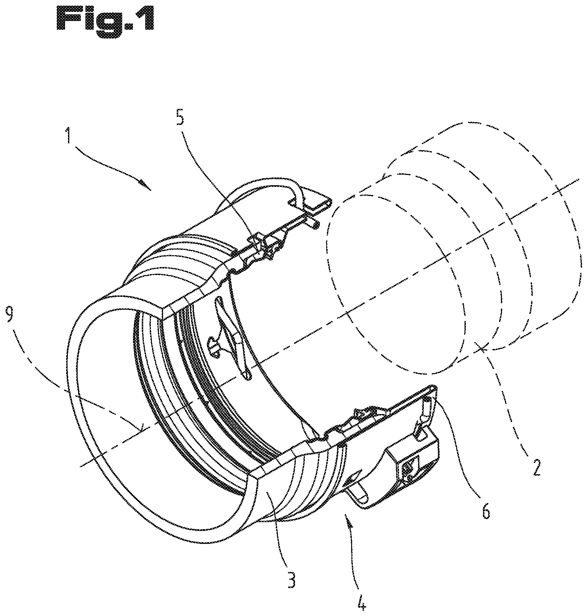

Fig. 1 zeigt eine perspektivische Ansicht einer Steckerbaugruppe 1, wobei diese in einem Viertelschnitt geschnitten dargestellt ist. Weiters ist in Fig. 1 schematisch ein Gegensteckverbinder 2 dargestellt, welcher mit der Steckerbaugruppe 1 verbindbar ist. Das Zusammenwirken zwischen Steckerbaugruppe 1 und einem Gegensteckverbinder 2 ist in der AT 509 196 B1 hinlänglich beschrieben.

In Fig. 1 ist die Steckerbaugruppe 1 in einem zusammengebauten Zustand dargestellt. Die Steckerbaugruppe 1 umfasst eine Leitung auch als Rohr 3 oder bezeichnet, welches durch einen mehr oder weniger flexiblen Schlauch oder durch ein im Wesentlichen starres Rohrelement gebildet sein kann und zur Führung von flüssigen oder gasförmigen Medien dient.

Weiters umfasst die Steckerbaugruppe 1 einen Steckverbinder 4 und gegebenenfalls ein zwischen Steckverbinder 4 und Rohr 3 eingebrachtes Dichtungselement 5. Das Dichtungselement 5 ist insbesondere notwendig, wenn das Rohr 3 aus einem harten Kunststoffmaterial besteht, welches nur geringfügig verformbar ist.

Der Steckverbinder 4 umfasst einen Verbinderkörper 6, welcher vorzugsweise als einteiliges Umformteil, etwa als Tiefziehteil, insbesondere aus einem Edelstahlblech gebildet sein kann.

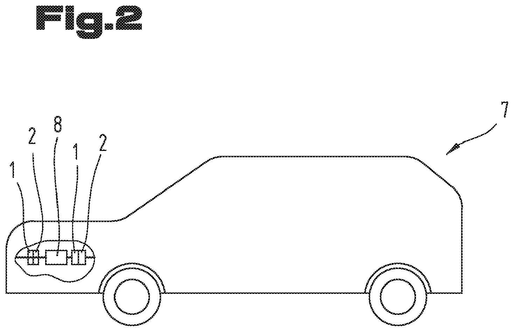

Fig. 2 zeigt eine schematische Darstellung eines Fahrzeuges 7 mit verbauter Steckerbaugruppe 1 entsprechend Fig. 1. Wie in Fig. 2 ersichtlich, wird die Steckerbaugruppe 1 vorzugsweise in einem Fahrzeug 7, insbesondere in einem straßengebundenen Kraftfahrzeug mit Verbrennungsmotor eingesetzt. Im Speziellen wird die Steckerbaugruppe 1 zum Verbinden verschiedener Bauteile der Frischluftzuführung zum Verbrennungsmotor eingesetzt. Beispielsweise kann vorgesehen sein, dass die Steckerbaugruppe 1 mit dem entsprechenden Gegensteckverbinder 2 zur Verbindung zweier Teile im Ansaugbereich eines Turboladers 8 vorgesehen ist. Weiters kann auch vorgesehen sein, dass eine derartige Steckerverbindung in der vom Turbolader 8 abgehenden Druckseite zur Verbindung zweier Bauteile eingesetzt wird.

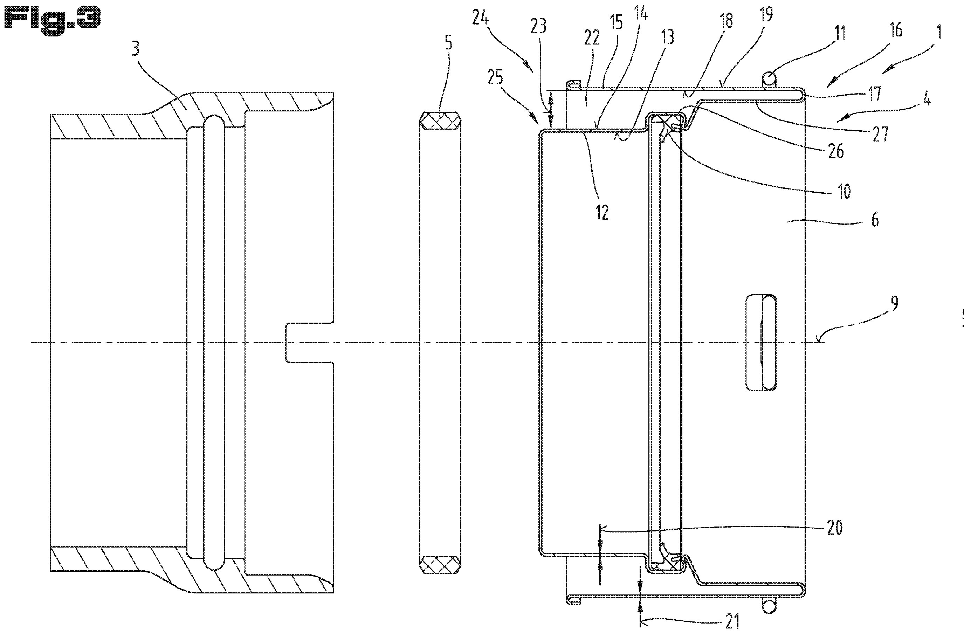

Fig. 3 zeigt einen Schnitt durch ein erstes Ausführungsbeispiel der Steckerbaugruppe 1 entlang einer zentralen Längsachse 9 des Steckverbinders 4. In diesem Ausführungsbeispiel ist das Rohr 3 als starres Rohr ausgebildet, welches nicht oder nur geringfügig verformbar ist. Bei einem derartigen starren Rohr kann es notwendig sein, dass auch ein Dichtungselement 5 verbaut wird. Um die einzelnen Bauteile gut beschreiben zu können, sind diese in der Fig. 3 in einer Explosionsansicht dargestellt.

Wie in Fig. 3 gut ersichtlich, kann vorgesehen sein, dass der Steckverbinder 4 neben dem Verbinderkörper 6 eine Steckerdichtung 10, welche im Verbinderkörper 6 aufgenommen ist, umfasst. Die Steckerdichtung 10 dient dazu, um die Steckerbaugruppe 1 im zusammengesteckten Zustand mit einem Gegensteckverbinder 2 ausreichend abdichten zu können.

Weiters kann der Steckverbinder 4 ein Federelement 11 umfassen, durch welches die Steckerbaugruppe 1 in deren Position relativ zum, mit der Steckerbaugruppe 1 zusammengestesteckten, Gegensteckverbinder 2 gesichert werden kann. Das Federelement 11 ist dermaßen konstruiert, dass es leicht aktiviert und deaktiviert werden kann, sodass bedarfsweise die Steckerbaugruppe 1 und der Gegensteckverbinder 2 voneinander getrennt bzw. miteinander verbunden werden können.

Wie in Fig. 3 ersichtlich, ist am Verbinderkörper 6 ein erster Mantelabschnitt 12 ausgebildet, welcher die zentrale Längsachse 9 des Steckverbinders 4 hülsenförmig umgibt. Mit anderen Worten ausgedrückt, ist der erste Mantelabschnitt 12 ein rotationssymmetrischer Hohlzylinder.

Der erste Mantelabschnitt 12 weist eine innenliegende Mantelfläche 13 und eine außenliegende Mantelfläche 14 auf. Den ersten Mantelabschnitt 12 umgibt ein zweiter Mantelabschnitt 15, welcher ebenfalls bezüglich der zentralen Längsachse 9 rotationssymmetrisch ausgebildet ist. Der erste Mantelabschnitt 12 ist mit dem zweiten Mantelabschnitt 15 an einem ersten Endabschnitt 16 mittels eines ersten Stirnwandabschnittes 17 verbunden.

Gleich wie der erste Mantelabschnitt 12 weist auch der zweite Mantelabschnitt 15 eine innenliegende Mantelfläche 18 und eine außenliegende Mantelfläche 19 auf.

Der erste Mantelabschnitt 12 wird durch seine innenliegende Mantelfläche 13 und die außenliegende Mantelfläche 14 begrenzt, wodurch sich eine Wandstärke 20 des ersten Mantelabschnittes 12 ergibt. Der zweite Mantelabschnitt 15 wird ebenfalls durch eine innenliegende Mantelfläche 18 und eine außenliegende Mantelfläche 19 begrenzt, wodurch sich eine Wandstärke 21 des zweiten Mantelabschnittes 15 ergibt.

Durch die Beabstandung der beiden Mantelabschnitte 12, 15 zueinander, ergibt sich ein Ringraum 22. Der Ringraum 22 wird insbesondere in radialer Richtung durch die außenliegende Mantelfläche 14 des ersten Mantelabschnittes 12 und durch die innenliegende Mantelfläche 18 des zweiten Mantelabschnittes 15 begrenzt. Insbesondere ergibt sich dadurch ein Ringraumspalt 23. Dieser Ringraumspalt 23 ist vorzugsweise so groß gewählt, dass das Rohr 3 zumindest teilweise darin aufgenommen werden kann. Im dargestellten Ausführungsbeispiel ist der Ringraumspalt 23 zwischen 2mm und 20mm, insbesondere, zwischen 3mm und 10mm, bevorzugt zwischen 5mm und 7mm groß.

Die beiden Mantelabschnitte 12, 15 sind an einem zweiten Endabschnitt 24 des Steckverbinders 4 offen zueinander, wodurch sich eine Rohraufnahmeseite 25 des Verbinderkörpers 6 ergibt.

Weiters kann vorgesehen sein, dass an den ersten Mantelabschnitt 12 in Richtung ersten Endabschnitt 16 des Steckverbinders 4 betrachtet, eine Dichtungsaufnahme 26 anschließt, welche ebenfalls im Verbinderkörper 6 ausgeformt ist. In einer derartigen Dichtungsaufnahme 26 kann eine Steckerdichtung 10 aufgenommen sein. Weiters kann vorgesehen sein, dass an die Dichtungsaufnahme 26 ein dritter Mantelabschnitt 27 anschließt, welcher zur Aufnahme des Gegensteckverbinders 2 dient. An den dritten Mantelabschnitt 27 kann der Stirnwandabschnitt 17 anschließen, welcher den dritten Mantelabschnitt 27 mit dem zweiten Mantelabschnitt 15 verbindet. Durch diesen Aufbau bzw. Zusammenhang ist, wie bereits erwähnt, der erste Mantelabschnitt 12 über den Stirnwandabschnitt 17 mit dem zweiten Mantelabschnitt 15 verbunden.

Bevorzugt wird der Verbinderkörper 6 in einem Tiefziehverfahren hergestellt, wobei sämtliche Wandstärken der Mantelabschnitte des Verbinderkörpers 6 in etwa gleich groß sind.

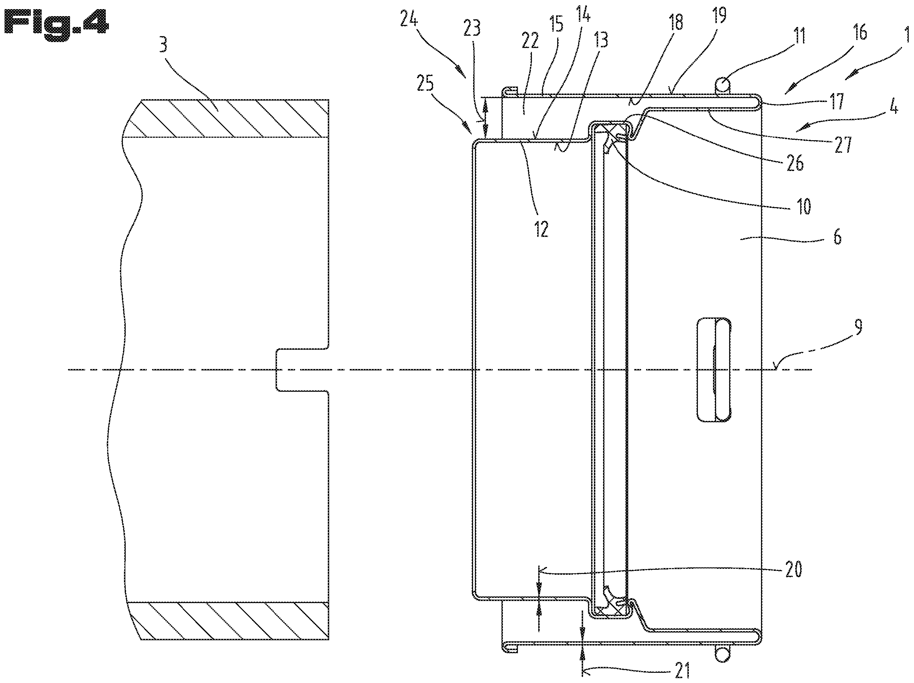

In der Fig. 4 ist eine weitere und gegebenenfalls für sich eigenständige Ausführungsform der Steckerbaugruppe 1 gezeigt, wobei wiederum für gleiche Teile gleiche Bezugszeichen bzw. Bauteilbezeichnungen wie in der vorangegangenen Fig. 3 verwendet werden. Um unnötige Wiederholungen zu vermeiden, wird auf die detaillierte Beschreibung in der vorangegangenen Fig. 3 hingewiesen bzw. Bezug genommen.

In dem Ausführungsbeispiel nach Fig. 4 ist das Rohr 3 aus einem elastischen Gummielement gebildet. Ein Dichtungselement 5 zum Abdichten zwischen Rohr 3 und Verbinderkörper 6 ist daher nicht zwingend notwendig, da ein derart ausgebildetes Rohr 3 verformt werden kann und daher eine Abdichtwirkung direkt zwischen Rohr 3 und Verbinderkörper 6 geschaffen werden kann.

Ein Zusammenbau der Steckerbaugruppe 1 wird im Folgenden anhand der Darstellung in den Figuren 3 und 4 beschrieben.

Bei dem Ausführungsbeispiel nach Fig. 3 wird in einem ersten Verfahrensschritt das Dichtungselement 5 in den Ringraum 22 eingesetzt. Ist das Dichtungselement 5 richtig im Verbinderkörper 6 positioniert, so kann nun in einem weiteren Verfahrensschritt das Rohr 3 in den Ringraum 22 eingeschoben werden.

Bei dem Ausführungsbeispiel nach Fig. 4 wird vorzugsweise direkt das Rohr 3 im Verbinderkörper 6 positioniert. Ein Positionieren des Dichtungselementes 5 kann entfallen.

Um die einzelnen Bauteile zueinander zu fixieren, ist bei beiden Ausführungsbeispielen vorgesehen, dass in einem weiteren Verfahrensschritt zur Herstellung der Steckerbaugruppe 1 der erste Mantelabschnitt 12 durch einen Pressvorgang plastisch verformt, daher verpresst wird, sodass eine formschlüssige Verbindung zwischen erstem Mantelabschnitt 12 und Rohr 3 hergestellt wird. Das Verpressverfahren an sich wird in weiterer Folge in der Figurenbeschreibung noch genauer erläutert.

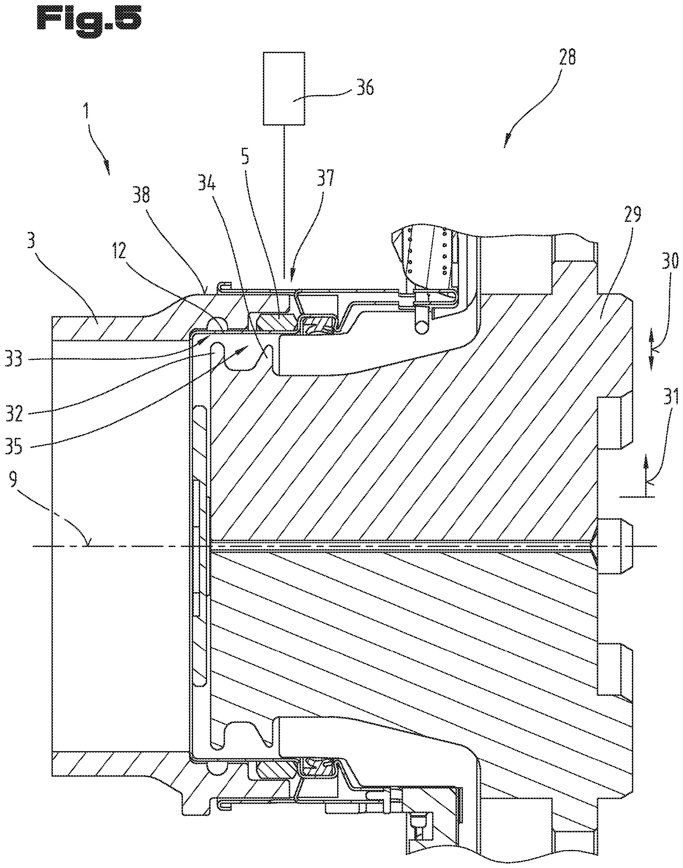

Fig. 5 zeigt eine Schnittdarstellung durch eine Pressmaschine 28 mit aufgespannter Steckerbaugruppe 1 entsprechend der Figuren 1 und 3, wobei auch hier die Schnittführung entlang der zentralen Längsachse 9 gewählt ist. Bei dem weiteren Ausführungsbeispiel der Steckerbaugruppe 1 gemäß Fig. 4, bei welchem ein elastisches Rohr 3 verwendet wird, wird in weiterer Folge der Verpressvorgang nicht gesondert erklärt, da er analog zum Ausführungsbeispiel der Steckerbaugruppe 1 gemäß Fig. 3 abläuft.

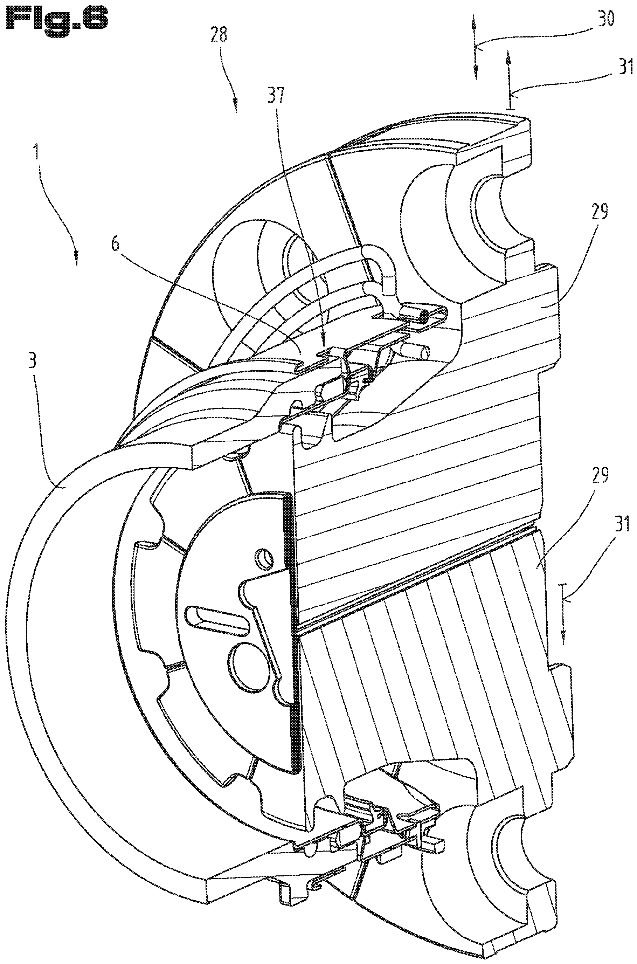

Fig. 6 zeigt eine perspektivische Ansicht der Schnittdarstellung entsprechend Fig. 5.

Wie in einer Zusammenschau aus Fig. 5 und Fig. 6 ersichtlich, umfasst die Pressmaschine 28 ein Presswerkzeug 29, mittels dem der erste Mantelabschnitt 12 des Verbinderkörpers 6 verformt werden kann und somit die Pressverbindung der Steckerbaugruppe 1 hergestellt werden kann. Das Presswerkzeug 29 verfährt während dem Verpressvorgang in Radialrichtung 30. Um eine dichte Verbindung zwischen Steckverbinder 4 und Rohr 3 herstellen zu können, ist ein gewisser Umformgrad des Steckverbinders 4 und somit ein gewisser Verfahrweg 31 notwendig, welchen das Presswerkzeug 29 verfahren muss.

Zum Verpressen eines starren Rohres 3 kann das Presswerkzeug 29 zwei Teilbereiche aufweisen. Ein erster Teilbereich 32 verformt während des Pressvorganges den ersten Mantelabschnitt 12 derart, dass eine erste Umformstelle 33 ausgebildet wird. Die erste Umformstelle 33 stellt hierbei eine formschlüssige Verbindung zwischen Rohr 3 und Verbinderkörper 6 her. Ein zweiter Teilbereich 34 des Presswerkzeuges 29 erzeugt eine zweite Umformstelle 35 durch welche das Dichtungselement 5 geklemmt wird.

Beim Verpressen eines elastischen Rohres 3 kann das Presswerkzeug 29 nur eine Pressnase aufweisen, welche während des Pressvorganges den ersten Mantelabschnitt 12 verformt.

Weiters kann eine Abstandsmesseinrichtung 36 vorgesehen sein, welche durch eine im zweiten Mantelabschnitt 15 angeordnete Fensteröffnung 37 hindurch die der Fensteröffnung 37 zugewandte Außenoberfläche 38 des Rohres 3 erfasst. Dadurch kann die Verformung des ersten Mantelabschnitts 12 in Abhängigkeit vom Ergebnis der mit der Abstandsmesseinrichtung 36 durchgeführten Erfassung der Oberfläche 38 des Rohres 3 durchgeführt werden.

Weiters kann vorgesehen sein, dass die Abstandsmesseinrichtung 36 vor dem einstecken des Rohres 3 in den Ringraum 22 eine richtige Lage des Dichtungselementes 5 am ersten Mantelabschnitt 12 erfasst.

Weiters kann vorgesehen sein, dass durch die Abstandsmesseinrichtung 36 der Außendurchmesser des ersten Mantelabschnittes 12 erfasst wird. Diese Information kann in der der Pressmaschine 28 dazu herangezogen werden, um beispielsweise den Verfahrweg 31 auf Basis des gemessenen Außendurchmessers zu steuern. Somit kann bei Messung eines größeren Außendurchmessers auch der Verfahrweg 31 des Presswerkzeuges 29 vergrößert werden, sodass der Verpressgrad bei aufgrund der Fertigungstoleranzen geringfügig unterschiedlichen Steckerbaugruppen 1 konstant gehalten werden kann.

Um eine während des Pressvorganges auftretende Beschädigung des Steckverbinders 4 detektieren zu können, ist vorgesehen, dass der Kraftverlauf, welcher während des Umformvorganges vom Presswerkzeug 29 aufgebracht wird, kontinuierlich überwacht und ausgewertet wird.

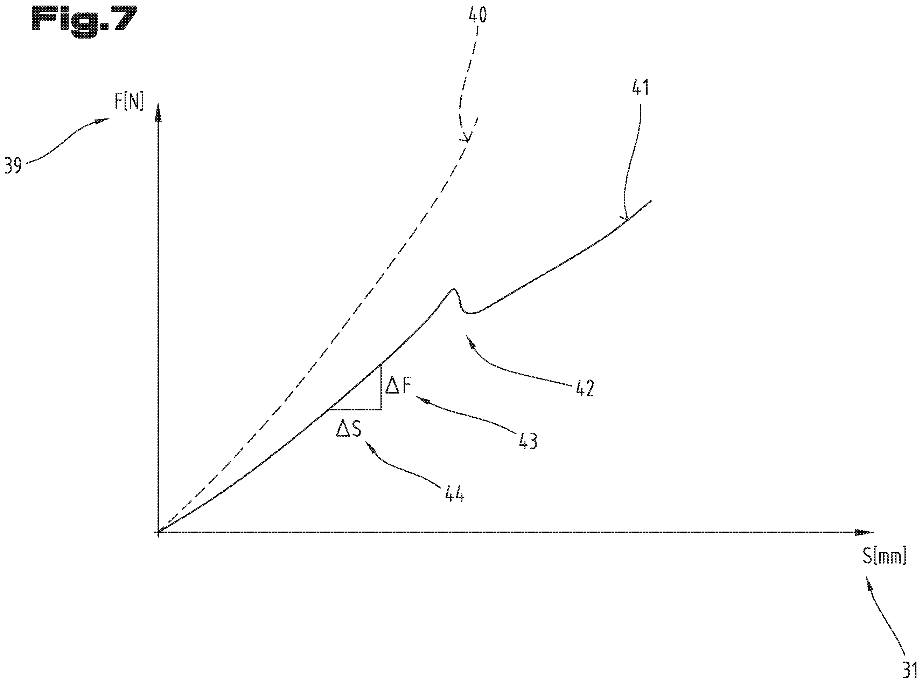

Diese Auswertung des Kraftverlaufes bzw. die Möglichkeit mittels der Auswertung des Kraftverlaufes einen Bruch des Steckverbinders 4 zu erkennen, wird anhand des Diagrammes in Fig. 7 detailliert beschrieben. Auf der Abszisse dieses Diagrammes ist der Verfahrweg 31 des Presswerkzeuges 29 aufgetragen. Auf der Ordinate des Diagrammes ist die von der Pressmaschine 28 aufgebrachte Presskraft 39 aufgetragen. Weiters ist strichliert ein möglicher Kraftverlauf 40 eines Gutteils aufgetragen und mit einer durchgehenden Linie ein möglicher Kraftverlauf 41 eines während des Verpessvorganges gebrochenen Teiles aufgetragen.

Aus Fig. 7 ist gut ersichtlich, dass die beiden Kraftverläufe 40, 41 grundsätzlich eine ähnliche Form aufweisen, wobei im Kraftverlauf 41 die Stelle des Werkteilbruches 42 anhand des Abfalles der Presskraft 39 erkennbar ist.

Um einen derartigen Werkteilbruch 42 zu detektieren, ist vorgesehen, dass während des Pressvorganges die am Presswerkzeug 29 anliegende Presskraft 39 erfasst wird. Die Presskraft 39 kann direkt am Presswerkzeug 29 mittels einer Kraftmessdose ermittelt werden. Alternativ dazu ist es auch denkbar, dass die Presskraft 39 durch Messung der aufgebrachten Kraft oder des aufgebrachten Drehmomentes am Antriebsstrang ermittelt wird. Aus der erfassten Presskraft 39 sowie dem Verfahrweg 31 des Presswerkzeuges 29 kann der Kraftverlauf 40, 41 ermittelt werden. Insbesondere wird ein Presskraftanstieg 43 pro Wegeinheit 44 ermittelt. Dieser ermittelte Presskraftanstieg 43 pro Wegeinheit 44 wird mit einem mindestens erforderlichen Presskraftanstieg 43 pro Wegeinheit 44 verglichen, wobei daraus Rückschluss über einen möglichen Bruch des Steckverbinders 4 gezogen werden kann.

Insbesondere wird davon ausgegangen, dass ein Bruch des Steckverbinders 4 vorliegt, wenn an irgendeinem Zeitpunkt während des Pressvorganges der erfasste Presskraftanstieg 43 pro Wegeinheit 44 kleiner ist als der mindestens erforderliche Presskraftanstieg 43 pro Wegeinheit 44. Wird dies erkannt, so kann vorgesehen sein, dass durch eine akustische und/oder eine optische Signalisierung dem Maschinenbediener angezeigt wird, dass ein Bruch des Steckverbinders 4 vorliegt.

Alternativ dazu kann vorgesehen sein, dass ein als fehlerhaft erkannter Steckverbinder 4 in einem automatischen Prozess ausgeschieden wird.

Um eine ausreichend hohe Auflösung zu erreichen, kann vorgesehen sein, dass als Inkrementeller Wert für Wegeinheit 44 ein Wert von 0,001 mm festgelegt wird. Entsprechend dieser feinen Auflösung kann auch der dabei auftretende Presskraftanstieg 43 entsprechend gering ausfallen.

Insbesondere wird davon ausgegangen, dass der Kraftverlauf 40 eines Gutteiles, das heißt eines nicht gebrochenen Steckverbinders 4, stets eine positive Steigung aufweist und dass daher der erforderliche Presskraftanstieg 43 pro Wegeinheit 44 einen positiven Wert größer 0 Newton aufweisen muss.

Die Steigung des Kraftverlaufes 40, 41 kann insbesondere aus dem arctan(Presskraftanstieg 43 / Wegeinheit 44) berechnet werden.

Eine weitere Berechnungsmethode basiert darauf, dass die erste Ableitung des Kraftverlaufes 40, 41 an jener Stelle null wird an welcher der Kraftverlauf 40, 41 im Bereich des Werkteilbruches 42 einen Wendepunkt aufweist.

Darüber hinaus kann bei der Überwachung des Kraftverlaufes 40, 41 auch eine maximale Kraft überwacht werden und somit eine Kraftverlaufsüberschreitung angezeigt werden. Die Überwachung der maximalen Kraft kann insbesondere eingesetzt werden, um ein Erreichen des vorgesehenen bzw. notwendigen Umformgrades der Verpressung ermitteln zu können. Wahlweise kann zusammen mit der maximalen Kraft auch der Verpressweg überwacht werden, um so das Erreichen des Umformgrades zu ermitteln.

Die Ausführungsbeispiele zeigen mögliche Ausführungsvarianten der Steckerbaugruppe 1, bzw. der Überwachung des Pressvorganges zur Herstellung einer Steckerbaugruppe 1 wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen. Der Schutzumfang der vorliegenden Erfindung wird jedoch ausschließlich durch die beigefügten Ansprüche bestimmt.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Steckerbaugruppe 1 diese bzw. deren Bestandteile teilweise unmaßstäblich und/oder vergrößert und/oder verkleinert dargestellt wurden. Und dass auch das Diagramm zur Darstellung des Kraftverlaufes zur besseren Verständlichkeit nur schematisch dargestellt ist.

**Bezugszeichenaufstellung**

| | | | |
|---|---|---|---|
| 1 | Steckerbaugruppe | 28 | Pressmaschine |
| 2 | Gegensteckverbinder | 29 | Presswerkzeug |
| 3 | Rohr | 30 | Radialrichtung |
| 4 | Steckverbinder | 31 | Verfahrweg |
| 5 | Dichtungselement | 32 | erster Teilbereich |
| 6 | Verbinderkörper | 33 | erste Umformstelle |
| 7 | Fahrzeug | 34 | zweiter Teilbereich |
| 8 | Turbolader | 35 | zweite Umformstelle |
| 9 | Längsachse des Steckverbinders | 36 | Abstandsmesseinrichtung |
| 10 | Steckerdichtung | 37 | Fensteröffnung |
| 11 | Federelement | 38 | Oberfläche |
| 12 | erster Mantelabschnitt | 39 | Presskraft |
| 13 | innenliegende Mantelfläche | 40 | Kraftverlauf Gutteil |
| 14 | außenliegende Mantelfläche | 41 | Kraftverlauf gebrochenes Teil |
| 15 | zweiter Mantelabschnitt | 42 | Werkteilbruch |
| 16 | erster Endabschnitt Steckverbinder | 43 | Presskraftanstieg |
| 17 | Stirnwandabschnitt | 44 | Wegeinheit |
| 18 | innenliegende Mantelfläche | | |
| 19 | außenliegende Mantelfläche | | |
| 20 | Wandstärke erster Mantelabschnitt | | |
| 21 | Wandstärke zweiter Mantelabschnitt | | |
| 22 | Ringraum | | |
| 23 | Ringraumspalt | | |
| 24 | zweiter Endabschnitt Steckverbinder | | |
| 25 | Rohraufnahmeseite | | |
| 26 | Dichtungsaufnahme Steckverbinder | | |
| 27 | Dritter Mantelabschnitt | | |

## Patentansprüche

1. Verfahren zum Verbinden eines Rohres (3), für flüssige oder gasförmige Medien, mit einem Steckverbinder (4), wobei ein erster Mantelabschnitt (12) des Steckverbinders (4) mittels einem Presswerkzeug (29) derart verformt wird, dass ein zwischen dem ersten Mantelabschnitt (12) und einem zweiten Mantelabschnitt (15) des Steckverbinders (4) liegendes Rohr (3) geklemmt wird, **dadurch gekennzeichnet, dass**
- während des Pressvorganges die am Presswerkzeug (29) anliegende Presskraft (39) erfasst wird und aus dem Verfahrweg (31) des Presswerkzeuges (29) sowie der Presskraft (39) ein Presskraftanstieg (43) pro Wegeinheit (44) berechnet wird;
- der erfasste Presskraftanstieg (43) pro Wegeinheit (44) mit einem mindestens erforderlichen Presskraftanstieg (43) pro Wegeinheit (44) verglichen wird und bei einem Unterschreiten des als mindestens erforderlich festgelegten Presskraftanstieges (43) pro Wegeinheit (44) der Steckverbinder (4) als fehlerhaft erkannt wird.

2. Verfahren nach Anspruch 1, **dadurch gekennzeichnet, dass** als Inkrementeller Wert für eine Wegeinheit (44) zwischen einem zehntausendstel Millimeter und einem zehntel Millimeter, insbesondere ein tausendstel Millimeter festgelegt wird.

3. Verfahren nach Anspruch 1 oder 2, **dadurch gekennzeichnet, dass** einem Maschinenbediener ein als fehlerhaft erkannter Steckverbinder (4) durch eine Akustische und/oder optische Signalisierung angezeigt wird.

4. Verfahren nach Anspruch 1 oder 2, **dadurch gekennzeichnet, dass** ein als fehlerhaft erkannter Steckverbinder (4) in einem automatisierten Prozess ausgeschieden wird.

5. Verfahren nach einem der vorhergehenden Ansprüche, **dadurch gekennzeichnet, dass** der Presskraftanstieg (43) pro Wegeinheit (44) aufgezeichnet und grafisch dargestellt wird.

6. Verfahren nach einem der vorhergehenden Ansprüche, **dadurch gekennzeichnet, dass** der mindestens erforderliche Presskraftanstieg (43) pro Wegeinheit (44) mit größer null Newton pro Wegeinheit (44) festgelegt wird.

7. Verfahren nach einem der vorhergehenden Ansprüche, **dadurch gekennzeichnet, dass** der Steckverbinder (4) dann als fehlerhaft erkannt wird wenn Presskraftanstieg (43) pro Wegeinheit (44) über mehrere Wegeinheiten (44) hinweg den mindestens erforderlichen Presskraftanstieg (43) unterschreitet.

## Claims

1. A method for connecting a pipe (3) for liquid or gaseous media with a plug connector (4), wherein a first casing section (12) of the plug connector (4) is deformed by means of a pressing tool (29) in such a way that a pipe (3) positioned between the first casing section (12) and a second casing section (15) of the plug connector (4) is clamped, **characterized in that**,
- during the pressing process, the pressing force (39) applied to the pressing tool (29) is detected and a pressing force increase (43) per unit of path length (44) is calculated from the travel (31) of the pressing tool (29) and the pressing force (39);
- the detected pressing force increase (43) per unit of path length (44) is compared to a minimum required pressing force increase (43) per unit of path length (44) and in the event, that the determined minimum required pressing force increase (43) per unit of path length (44) is not met, the plug connector (4) is identified as faulty.

2. The method as claimed in claim 1, **characterized in that**,an incremental value for a unit of path length (44) is set to be between one ten-thousandth of a millimeter and one tenth of a millimeter, in particular a thousandth of a millimeter.

3. The method as claimed in claim 1 or 2, **characterized in that**,a plug connector (4) identified as faulty is indicated to a machine operator by means of an acoustic and/or visual signal.

4. The method as claimed in claim 1 or 2, **characterized in that**,a plug connector (4) identified as faulty is removed in an automated process.

5. The method as claimed in any of the preceding claims, **characterized in that**,the increase in pressing force (43) per unit of path length (44) is recorded and represented graphically.

6. The method as claimed in any of the preceding claims, **characterized in that**,the minimum required pressing force increase (43) per unit of path length (44) is set to be greater than zero Newton per unit of path length (44).

7. The method as claimed in any of the preceding claims, **characterized in that**,the plug connector (4) is identified as faulty when the pressing force increase (43) per unit of path length (44) over several unit of path lengths (44) falls below the minimum required pressing force increase (43).

## Revendications

1. Procédé d'assemblage d'un tuyau (3), pour milieux liquides ou gazeux, à un raccord enfichable (4), un premier tronçon d'enveloppe (12) du raccord enfichable (4) étant déformé au moyen d'un outil de compression (29) de telle sorte qu'un tuyau (3) situé entre le premier tronçon d'enveloppe (12) et un deuxième tronçon d'enveloppe (15) du raccord enfichable (4) est serré, **caractérisé en ce que**
- pendant le processus de compression, la force de compression (39) régnant sur l'outil de compression (29) est détectée, et une augmentation de la force de compression (43) par unité de course (44) est calculée à partir de la course de déplacement (31) de l'outil de compression (29) ainsi que de la force de compression (39) ;
- l'augmentation de la force de compression (43) détectée par unité de course (44) est comparée à une augmentation de la force de compression (43) par unité de course (44) au moins nécessaire et, en cas de passage au-dessous de l'augmentation de la force de compression (43) par unité de course (44) stipulée comme étant au moins nécessaire, le raccord enfichable (4) est identifié comme défectueux.

2. Procédé selon la revendication 1, **caractérisé en ce qu'**entre un dix millième de millimètre et un dixième de millième, en particulier un millième de millimètre, est stipulé en tant que valeur incrémentielle pour une unité de course (44).

3. Procédé selon la revendication 1 ou 2, **caractérisé en ce qu'**un raccord enfichable (4) identifié comme défectueux est indiqué à un opérateur par une signalisation acoustique et/ou optique.

4. Procédé selon la revendication 1 ou 2, **caractérisé en ce qu'**un raccord enfichable (4) identifié comme défectueux est mis au rebut dans un processus automatisé.

5. Procédé selon l'une des revendications précédentes, **caractérisé en ce que** l'augmentation de la force de compression (43) par unité de course (44) est enregistrée et représentée graphiquement.

6. Procédé selon l'une des revendications précédentes, **caractérisé en ce que** l'augmentation de la force de compression (43) par unité de course (44) au moins nécessaire est stipulée comme étant supérieure à zéro newton par unité de course (44).

7. Procédé selon l'une des revendications précédentes, **caractérisé en ce que** le raccord enfichable (4) est identifié comme défectueux quand l'augmentation de la force de compression (43) par unité de course (44) passe au-dessous de l'augmentation de la force de compression (43) au moins nécessaire pendant plusieurs unités de course (44).
